(19) Europäisches Patentamt
European Patent Office
Office européen des brevets

(11) **EP 2 360 867 A1**

(12) **EUROPEAN PATENT APPLICATION**

(43) Date of publication:
**24.08.2011 Bulletin 2011/34**

(51) Int Cl.:
***H04L 5/00*** *(2006.01)* ***H04W 72/12*** *(2009.01)*

(21) Application number: **10154148.0**

(22) Date of filing: **19.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Sequans Communications**
**92800 Puteaux (FR)**

(72) Inventor: **Uziel, Lior**
**45372, HOD HASHARON (IL)**

(74) Representative: **Le Saux, Gaël**
**Cabinet Vidon**
**Technopole Atalante**
**16B, rue de Jouanet**
**35703 Rennes Cedex 7 (FR)**

(54) **Method and apparatus for UL scheduling in a collaborative spatial multiplexing OFDMA system**

(57)    The invention relates to a method for enhancing uplink frame throughput in an OFDMA system.

According to the invention, said method comprises, after a preliminary uplink map fill phase for at least one mobile station comprising allocation of grants in said uplink frame for said at least one mobile station, said method comprising at least one iteration of:
- a subchannel expansion step in which at least one subchannel is added to a subchannel of said uplink frame for said at least one mobile station, delivering an expanded uplink map;
- a slot compression step in which an improvement of a modulation and coding scheme is realized by increases said modulation and coding scheme of a grant dependent on an current pair/s optimizing mutual capacity delivering an improved uplink map.

Fig. 1

**Description**

**1 DOMAIN OF THE INVENTION**

The invention relates to wireless digital transmission using orthogonal frequency-division multiplexing. More particularly, the invention relates to a method and to a device for enhancing specific frame throughput in OFDMA system.

With the continuously increasing demand on high data rates on every application of mobile radio technology, emerging technologies like LTE *(Long Term Evolution)* and WiMAX (*Worldwide Interoperability for Microwave Access*) are advancing in order to respond to the needs for future mobile wireless access systems. One of the common aspects of LTE and WiMAX is the orthogonal frequency-division multiple access (OFDMA) adopted in the air-interface as multiple access technique for the downlink transmission. OFDMA is based on orthogonal frequency-division multiplexing (OFDM).

**2 BACKGROUND AND PRIOR ART SOLUTIONS**

In OFDMA, a base station is granting bandwidth to several subscribers in a so called uplink frame (UL frame). Thus a base station allocates the appropriate OFDMA time-frequency resources.

In an OFDMA based communication system, a frame consists of several OFDM symbols. Each symbol may have multiple sub-carriers that are grouped together to form a sub-channel. Thus, an OFDM symbol may have multiple sub-channels. In a time division duplex (TDD) system, for example, an OFDMA frame may have M symbols and N sub-channels. The OFDMA frame has a downlink (DL) part called as DL sub-frame and an uplink (UL) part known as UL sub-frame (or UL frame). The DL sub-frame starts with a preamble that is used for synchronization followed by Frame Control Header (FCH), which provides frame configuration information. The FCH is followed by downlink MAP (DL-MAP) and uplink MAP (UL-MAP) messages that contain sub-frame allocations and other control information for downlink (DL) and uplink (UL) sub-frames, respectively. Thus, a base station comprises many functional modules, including an uplink QoS ("Quality of Service") scheduler, an uplink map scheduler.

UL collaborative Spatial Division multiple Access (SDMA) is one of the advanced MIMO ("Multiple-Input Multiple-Output") schemes, where several different single antenna stations share the same Orthogonal Frequency Division Multiplexing Access (OFDMA) time-frequency resources, transmitting several data streams. This scheme is also called CSM for "Collaborative Spatial Multiplexing".

In SDMA/CSM, the base station has to schedule concurrent transmissions from the stations which will be referred too as "pairing". A "blind"/"random" scheduling strategy (randomly pair stations) simplifies implementation and may even reduce the impact of pairing several incompatible station's signals (introducing some diversity), but is proved to result in a system performance degradation.

On the other hand, a "true"/"strict" pairing scheduling strategy (using a metric such as correlation between a pair of subscribers, to pair stations) has improved performance, but the main disadvantages of this strategy, are the credibility of the metrics and the resources needed (computing and storing the metrics, selecting the disjointed pairs in a proper manner).

During the granting process, the base station (BS) has to invoke algorithms for determining which of the pending grants will be allocated, what modulation should be used for each of them, and how to construct the complex OFDMA frame matrix as a collection of rectangles that fit into a single matrix with fixed dimensions. In SDMA/CSM, several overlapping UL OFDMA frames (one for each spatial stream), influencing one another, needs to be "paved".

One of the key features of a wireless communication system is to efficiently use the limited radio resources. One of the key differentiators between bases stations vendors is the ability to maximize the capacity and throughput while sustaining the QoS ("Quality of Service").

**3 MAIN FEATURES OF THE INVENTION**

In view of the drawbacks of the prior art, the present invention aims to provide an improved method and system for enhancing uplink frame throughput in an OFDMA system. This is achieved by the features of the independent claims.

More particularly, the invention relates to a method for enhancing uplink frame throughput in an OFDMA system characterized in that it comprises, after a preliminary uplink map fill phase for at least one mobile station comprising allocation of grants in said uplink frame for said at least one mobile station. According to the invention said method comprising at least one iteration of:

- a subchannel expansion step in which at least one subchannel is added to a subchannel of said uplink frame for said at least one mobile station, delivering an expanded uplink map;
- a slot compression step in which an improvement of a modulation and coding scheme is realized by increases the modulation and coding scheme of a grant dependent on an current pair/s optimizing mutual capacity delivering an improved uplink map.

Thus, the invention allows allocating and ordering the allocation of grants in an uplink map in a more efficient way than prior art method, driving to an increase of the uplink frame throughput.

According to a specific feature of the method, grants are assigned in said preliminary uplink map fill phase by using a statistical pairing of a spatial multiplexing scheduling strategy for said at least one mobile station.

Thus, the allocation of the grants can be changed in the uplink map, which can not be done with true/strict pairing method.

According to a specific feature of the method, said statistical pairing divides a group of mobiles stations into sub-groups based on metrics related to mobiles stations themselves.

According to a specific embodiment of the invention, said subchannel expansion step comprises:

- a polling step, to a quality of service scheduler, for identifying at least one pending grant to allocate for said at least one mobile station;
- a checking step for determining an availability of at least one vacant slot in said uplink map for said at least one pending grant, a slot being a part of a subchannel in said uplink map and
- an allocation step, in said uplink frame map, of said vacant slot for said pending grant if said previous checking step is positive.

According to a specific feature of the method, said expansion step also comprises a second checking step for determining whether said grants of said at least one mobile station can be expanded and wherein said allocation step is processed if said second checking is positive.

Thus, the invention prevents an expansion of specifics MCS, such as retransmitted bursts in which the MCS must remain the same or an existence of restrictions on the allocation of the grants.

According to a specific embodiment of the invention, said slot compression step comprises:

- A step of receiving at least one UL MAP, an UL MAP presenting a single spatial stream, the number of MAPs received is the number of parallel spatial streams and an UL Map comprising UL grants previously assigned for said single spatial stream;
- A step of improving an MCS for at least one grant of said at least one UL Map;
- A step of recalculating of new sizes for all grants of said at least one UL Map;
- A step of saving history of grant/s which did not end for the following pairs.

In another embodiment, the invention concerns an apparatus for enhancing uplink frame throughput in and OFDMA system. According to the invention, said apparatus comprises:

- means for filling an uplink map for at least one mobile station comprising allocating of grants in said uplink frame for said at least one mobile station;
- means for expanding a subchannel in which at least one subchannel is added to an subchannel of said uplink frame for said at least one mobile station, delivering an expanded uplink map;
- means for compressing slot comprising means for an improvement of a modulation and coding scheme (MCS) by increasing the MCS of a grant dependent on an current pair/s optimizing mutual capacity delivering an improved uplink map.

In a specific embodiment of the invention, such an apparatus is a base station.

The invention also relates to a computer program product downloadable from a communications network and/or stored on a computer readable medium and/or executed by a microprocessor. According to the invention, said computer program products includes instructions of program code for implementing the uplink frame throughput enhancing method by at least one of claims 1 to 6 when run on a computer.

## 4 BRIEF DESCRIPTION OF THE DRAWINGS

The proposed method is described in the following by way of examples in connection with the accompanying figures without limiting the scope of the protection as defined by the claim. The figures show:

- Fig. 1 represents a flowchart of the method of the invention;
- Fig. 2, Fig 3 and Fig 4 illustrates the states of the MAP and QoS scheduler and allocated packets at preliminary UL MAP fill phase over;

- Fig. 5 describes the states of the MAP and QoS scheduler and allocated packets at the subchannel expansion mechanism;
- Fig. 6 describes a flowchart of the subchannel expansion mechanism;
- Fig. 7 illustrates the state of the MAP scheduler and allocated packets at compression of the slots;
- Fig 8 describes a flowchart of the slot compression mechanism
- Fig 9 illustrates the growth of data bits per specified link budget in various specifics conditions.

**5 DESCRIPTION OF A PREFERED METHOD OF EMBODIMENT OF**

**THE INVENTION, AND RELATED HARDWARE**

5.1 <u>Main features of the Invention</u>

As already mentioned, the invention provides a method for mapping strategy, improving the uplink frame (UL) throughput and capacity. The method uses three tools in an iterative manner:

- A statistical pairing for SDMA/CSM signals: using the same OFDMA time-frequency resources, scheduling concurrent data streams is by itself a known method for increasing the capacity and throughput of the UL frame. A scheduling strategy apparatus and method is introduced, to achieve a gain over a naïve "random"/"blind" pairing strategy avoiding the disadvantages of the "true"/"strict" pairing strategy, by using a general rules to have a "statistical" pairing of stations. In addition, this method imposes no restrictions on transmission allocation inside the frames which will be used by the next tools.
- A subchannel expansion for all uplink (UL) signals: each station transmissions are managed by a link adaptation algorithm. There is a degree of freedom deciding whether the station's transmitted power is concentrated in a narrow frequency allocation (utilizing a more efficient MCS) or whether spreading it over a wide frequency allocation (utilizing a less efficient MCS but with overall more bandwidth).
  According to the invention, when the uplink frame is not fully loaded, the cell efficiency is traded for more capacity by expanding the frequency allocation (the granularity of expansion is a subchannel). According to the invention, the choice of the statistical pairing assures that no pairing restrictions are imposed on the SDMA/CSM grants. This special feature allows this change of frequency allocation by the subchannel expansion mechanism.
- A slot compression for SDMA/CSM signals: The initial MCS chosen for each UL CSM grant is based on the worst case scenario of being paired with the worst possible candidate. Dependent on the actual pair/s, the MCS grants of both candidates can be optimized to increase mutual capacity. Increasing the MCS shall reduce the utilization (hence the name "slots compression").
  According to the invention, the choice of the statistical pairing assures that no pairing restrictions are imposed on the SDMA/CSM grants. This special feature allows this change of utilization.

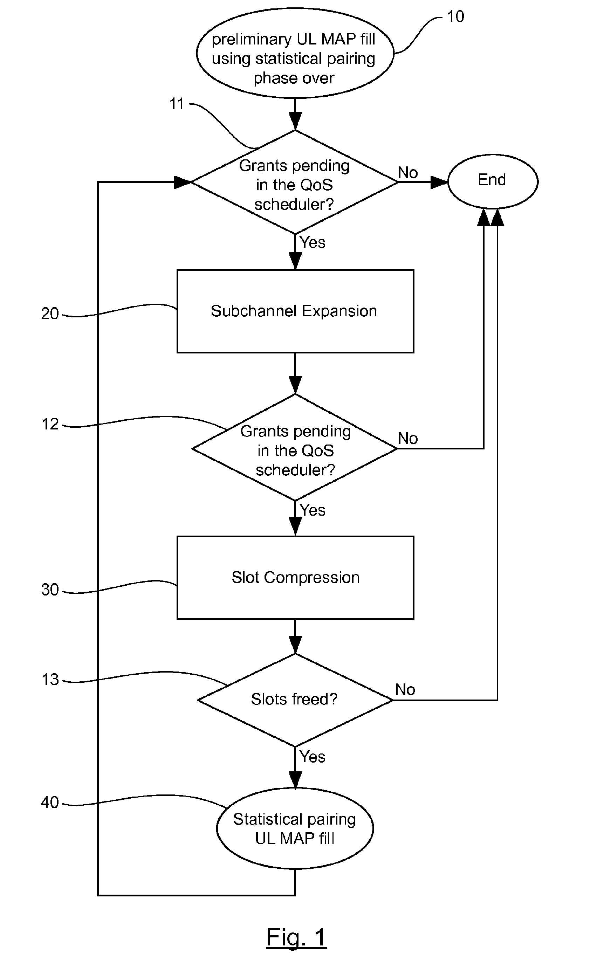

The iterative manner allows going through tools that push more bandwidth from the QoS into the map, then through a tool that compresses the inserted bandwidth and so forth, constantly utilizing a statistical pairing for insertion grants while not imposing pairing restrictions which is a required criterion for the mentioned tools.
The method of the invention uses a "statistical" pairing of SDMA/CSM signals as a basis, and iteratively increasing capacity and throughput by using tools, based on the fact that the "statistical" pairing method does not introduce pairing constraints.
The mapping strategy method is to iteratively use the subchannel expansion and the slot compression tools to increase capacity and throughput of the UL frame. The strategy supports the simple architecture of disjointing the QoS and the mapping schedulers: first assigning a grant due to QoS constraints of subscribers, and then optimize the mapping to achieve maximal frame capacity/throughput.
The general approach of the invention is presented in relation with figure 1. The starting point (10) is by receiving an uplink mapping with grants assigned to be allocated,

- the second point (20) is a subchannel expansion step,
- the third point (30) is a slot compression step.
- The fourth point (40) is a refilling of the UL slots that were freed by using the statistical pairing

Iteratively, before the subchannel expansion step and before the slot compression step, the method comprises two verification steps (11, 12) which verify whether grants are pending in the QoS scheduler. At the end of the slot compression step, the method comprises a verification step (13) which checks if some slots have been freed or not. If some slots have been freed, the process continues to the refilling using statistical pairing step before restarting from the first verification step (11).

The method disclosed herein provides the following advantages:

- Maximizing both the capacity and the throughput while sustaining the QoS
- Iterative nature makes the strategy easy to implement with a reasonable convergence time
- Allows for a simple map scheduling strategy that imposes no restrictions on spatial multiplexing

5.1.1 <u>Preliminary UL MAP fill phase over:</u>

The starting point is by receiving, in a base station, an UL mapping with grants assigned to be allocated. The UL grants are counted for their resources, but not actually allocated (they don't have a specific time-frequency allocation, nor is the UL MAP -which scheduled the UL grants- updated).

Having used the statistical pairing of a spatial multiplexing scheduling strategy, corroborate the fact that no pairing restrictions are imposed on the spatial multiplexing grants which will allow for changes to be made (frequency allocation / MCS, for "modulation and coding scheme") hence changing the dimensions of the allocations. The modulation and coding scheme (MCS) is derived from the "Carrier to Interference-plus-Noise Ratio" (CINR) of the UL signal in the base station.

Each of the following three conditions shall cause the reception of the UL mapping:

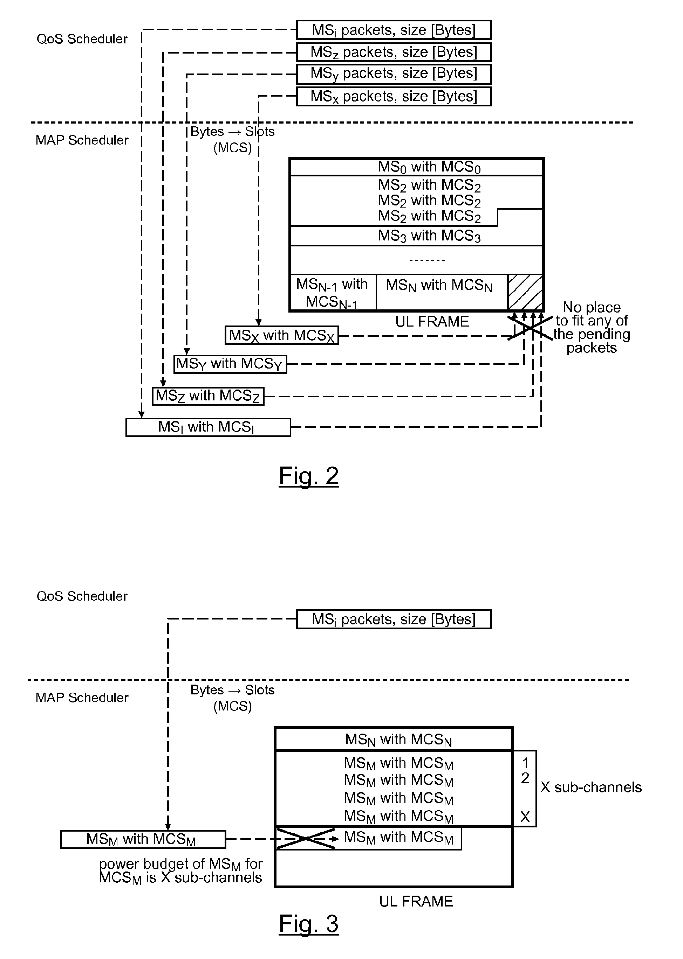

1. The UL frame is fully assigned with grants. Grants are still pending from the QoS scheduler. In the case of SDMA/CSM all of the UL frames need to be fully assigned (see figure 2).

2. Grants from certain subscribers can't be allocated due to lack of power budget, even though the frame is not fully utilizes (no problem of radio resources), and no other grants that can be allocated are pending. In the case of SDMA/CSM all the mobiles stations (MS)s allocated to the different UL frames need to be blocked by power budget (see figure 3).

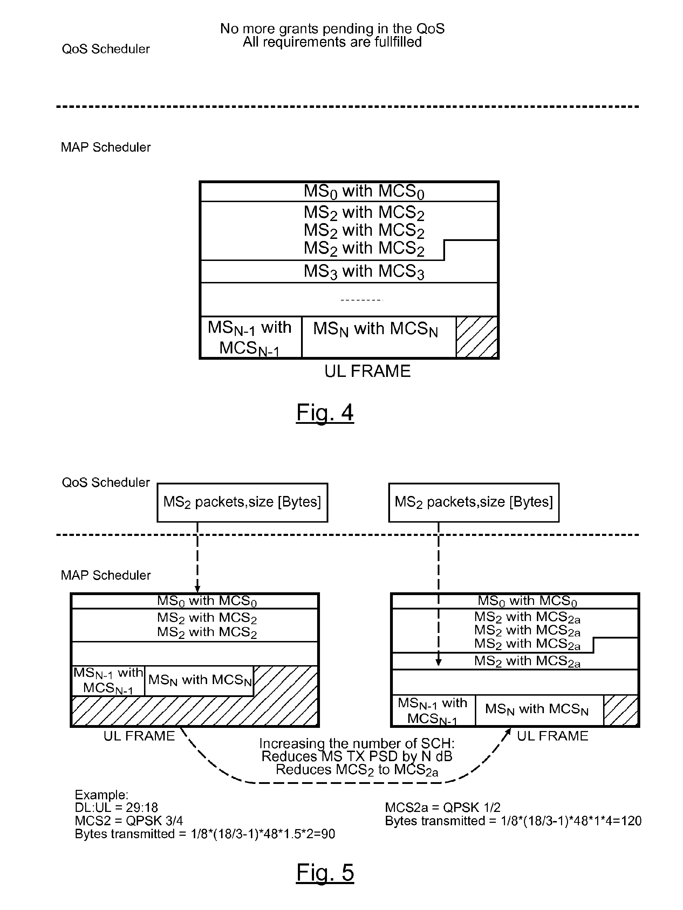

3. No grants are pending from the QoS scheduler, thus all requirements are fulfilled (see figure 4).

5.1.2 <u>Subchannel expansion mechanism:</u>

A mobile is limited by the amount of power it can transmit. This power is dependent on the RX transmit chain (selection of the Power Amplifier, losses on the cable, antenna gain). This transmit power dictates the power budget that an UL can sustain (i.e. the transmit power minus the link loss needs to be strong enough for the base station RX chain to decipher).

In OFDMA modulation and access method, a mobile station can transmit at a fraction of the bandwidth (BW) called subchannel.

Therefore the transmitted power can be concentrated in a single sub-channel, increasing the transmitted power density. The more subchannels transmitted on the UL by the mobiles stations, the lower the transmitted power density will be and the chosen modulation and coding scheme (MCS) is reduced. The throughput is equal to the multiplication of two contradicting figures: efficiency ([bits/subchannels] dependent on MCS) and number of subchannels. Increasing the number of subchannel will reduce the efficiency and vice-versa.

According to the "Carrier to Interference-plus-Noise Ratio" (CINR) detected by the base station (BS), several working points can be chosen. These working points are the joint of two parameters: (MCS, #SC).

It appears, that according to CINR tables (dependent on the RX chain of the BS, the channel, etc...), the throughput consistently rises with number of subchannels (and with the reduction of efficiency).

According to the invention, subchannel expansion mechanism is activated in order to increase throughput on account of efficiency. The strategy of the UL adaptation scheme is such that the MCS chosen for each subscriber's UL burst is the most efficient possible to maximize the capacity of the whole frame. In an unloaded frame, a different working point is chosen - with a more robust MCS and with an increased number of UL subchannels - and the total throughput is increased.

An example is given on figure 5 This example is correct also for SDMA/SCM UL transmissions since a MS transmits on a single UL frame in those cases as well.

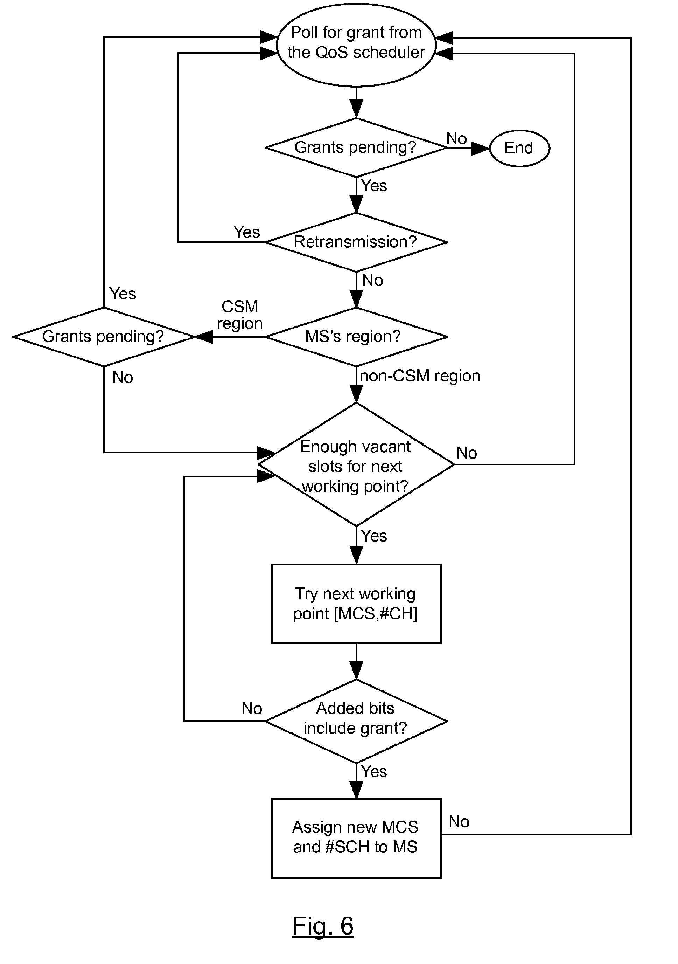

The subchannel expansion mechanism comprises the following steps, described in relation with figure 6

1. Poll for grant from the QoS scheduler.
The starting conditions of the subchannel expansion mechanism is that the UL frame is not fully loaded (hence there are several vacant slots) and a pending grant from a certain MS can't be allocated due to the fact that the MS had reached the maximal number of subchannels in the current working point (MCS, #SC), as indicated in condition #2 for the preliminary UL MAP fill phase over (see before).

The subchannel expansion mechanism tries different working points (MCS, #SC) in an iterative manner until the additional throughput added by the increase of subchannels is the same / higher than the pending grant. The iterative manner assures that the pending grant is successfully allocated with the most efficient MCS (minimum degradation of capacity).

2. Are Grant Still Pending?

The ending point for this iterative process is the fact that there is no more grant to be checked for expansion. This can happen either in two cases indicated in the Preliminary UL MAP fill phase over:

- Condition #3 indicating that there are no more grants pending in the QoS scheduler;
- Condition #1 indicating that there are still grants pending in the QoS scheduler, but there are no more vacant slots to accommodate them.

3. Is there Retransmission?

Retransmitted bursts shall not be expanded since the MCS must remain the same, but that will not prevent other UL bursts from the same subscriber from being expanded. This complexity is taken into account in the calculation of the power budget for each possible working point.

4. Mobile Station's region and mobility of the mobile station (is MS static?) Expanding the subchannels can be done as long as there are no restrictions on the allocation of the grants. In the case of grants of a MS in spatial multiplexing region that have gone through slot compression, the grants allocation are static and can't be changed, which contradicts the expanding mechanism. That is the main reason for the subchannel expansion mechanism activated prior to the slot compression mechanism.

5. "Is there enough vacant slots?" and "try next working point" and "added bits include grant?"

This is the iterative nature of the algorithm.

Each iterative step has the algorithm trying each working point from the group that accommodates the power budget of the MS. Each working point expanding the number of subchannels, until no more vacant slots are available.

In each working point, the increase in throughput is examined and if this increase is bigger than the pending grant, the new working point is accepted (new MCS, new allocation).

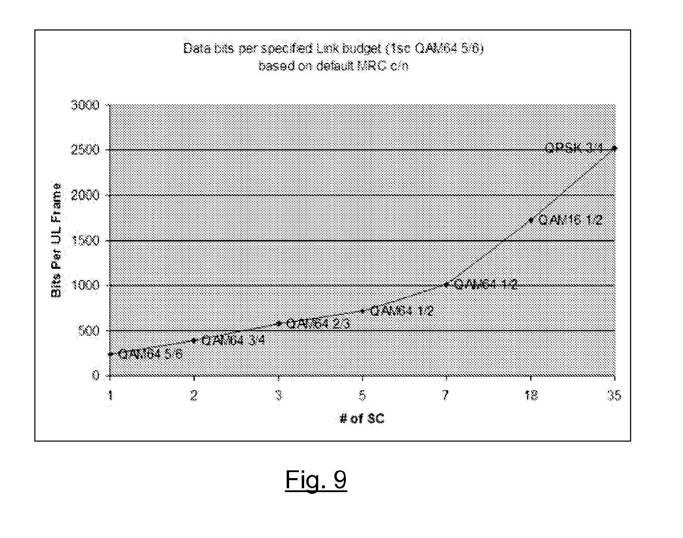

For example, referring to figure 9 (displaying working points for receiving of a signal at CINR appropriate for a single subchannel in QAM 64 5/6):

- First working point is the initial one, single subchannel with 64QAM 5/6. 240 bits are contained in each time slot (48 subcarriers * 6 bits of 64QAM * 5/6 FEC code)
- The next working point is two subchannels with 64QAM ¾. 2*216=432 bits are contained in each time slot (2 subchannels * 48 subcarriers * 6 bits of 64QAM * ¾ FEC code). This is an increase of 80% in the amount of bits that are to be transmitted by the MS, on account of being 90% less efficient (216/240).
- The next working point is three subchannels with 64QAM 2/3. 3*192=576 bits are contained in each time slot (3 subchannels * 48 subcarriers * 6 bits of 64QAM * 2/3 FEC code). This is an increase of 140% in the amount of bits that are to be transmitted by the MS, on account of being 80% less efficient (192/240).
- And so forth....

The iterative process stops when there are no more vacant slots to use. If there are only enough vacant slots for an increase of a single subchannel for example, then the process stops at the second work point (2 subchannels, 64QAM ¾MCS).

5.1.3 <u>Slot compression mechanism</u>

Using the statistical pairing of a spatial multiplexing scheduling strategy, as previously supposed (and done in accordance with the invention), assures that no pairing restrictions are imposed on the spatial multiplexing grants. The preliminary MCS chosen for each UL bursts are the worst case, thus improving them will reduce the utilization (hence "Slot Compression"). Thus, the Slot Compression is an improvement of the modulation and coding scheme in the UL map. More particularly the so called slot compression mechanism increases the MCS of a grant dependent on the actual pair/s optimizing mutual capacity.

Each grant from the QoS scheduler is allocated dependent on allocation rules (referral to the statistical pairing). Not coping with the allocation map rules shall not prevent the MCS improvement (slot compression) from taking place, since the map allocation rules are a statistical tool with no actual knowledge of the pairing and the slot compression mechanism is a mechanism verifying the pairing.

However, some constraints remain: for example, retransmitted bursts shall not be slot compressed since the MCS must remain the same, but that will not prevent other UL bursts from the same subscriber from being compressed.

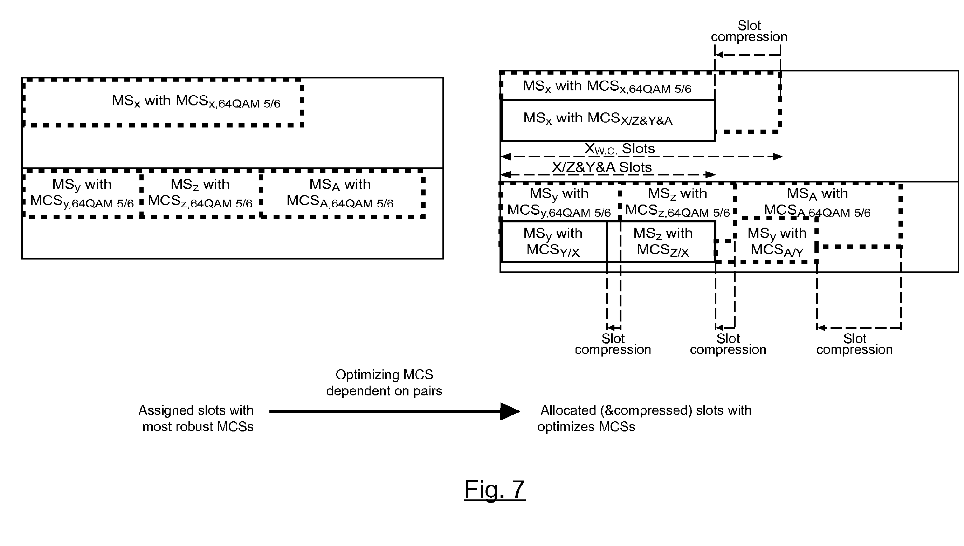

At the end of the iterative process of the slot compression, the UL grants' MCS will be improved which will cause the allocation of the grants to compress (figure 7). This will free previously allocated slots (subchannels), and these vacant slots (subchannels) can be used further in the whole UL improvement process (by restarting the subchannel expansion mechanism)

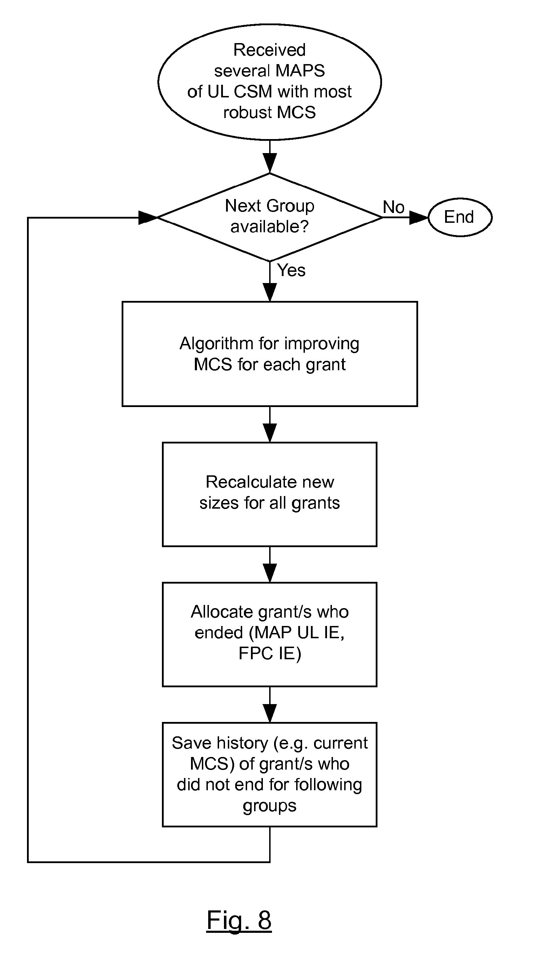

More particularly, the so called slot compression mechanism comprises the following steps, described in relation with figure 8:

1. Received several MAPs of UL CSM with most robust MCS.
Receiving several MAPs, each presenting a single spatial stream; the number of MAPs received is the number of parallel spatial streams. Each MAP contains the UL grants previously assigned for the specific spatial stream; the allocation size of the grant is calculated per the initial worst case MCS as described previously.
A group of grants is composed of parallel allocated grants, and refers to each slot in UL. The maximal number of grants in a group is the number of parallel streams.
2. Is there a next group available?
The ending point for this previous iterative process (step 1) is that there are no more groups to handle. A group can contain between a single grant (on one of the parallel streams) and up to the number of parallel streams (distinct). A slot with no grant on each parallel stream is an indication of that last case.
3. Application of the Algorithm for improving MCS for each grant.
The algorithm is activated on each distinct group of parallel grants. Since there are no restrictions on the sizes of the grants (due to the statistical pairing as opposed to the strict/true pairing), the algorithm is activated in an iterative manner over the allocation containing specific mixture of grants. The size of the checked allocation is the minimal size of one of all the parallel grants. The checked allocation can contain between a full single grant up to fully include all the parallel grants (in case all are in the same size).
The compression algorithm itself is detailed below.
4. Recalculation of new sizes for all grants.
The improved (hence more efficient) MCS for each of the grants in the current group, causes the assignment size of the grant to be compressed. The new assignment sizes are to be calculated, and new distinct groups (containing a different mixture of UL grants) may be formed.
This is the actual cause for the iterative nature of the process, the fact that each change in MCS and allocation size of an UL grant will influence the structure of the groups.
5. Allocate grant/s which ended
As previously mentioned the size of the checked allocation of a distinct group is the minimal size of one of all the parallel grants. The checked allocation can contain between a full single grant up to fully include all the parallel grants (in case all are in the same size). Due to the change in allocation sizes of all the grants, the allocation size can be changed and also the number of grants fully incorporated in it can be changed as well. In this part the grants ending with the allocation checked, are allocated (fixated) to the MAPs (inserting a MAP UL Information Element "IE", fixating the MCS and size of the allocation, correcting the transmit power according to the new MCS chosen...).
In WiMAX, a map contains an Information Element "IE" for each sub-burst real allocation with the attributes: MCS, duration in slots....).
These grants are fixated, and shall not change from now on (not by subchannel expansion and not by an iterative pass by the slot compression).
In other words, there are several parallel grants in each group, maximal pilot pattern map grants. Each one may have different size (number of slots), different start point (#slot) and different end point (#slot). The algorithm fixates the ones which end at the end of the group. But, in the case where several grants end at the same time, all of them are fixated.
6. Save history of grant/s which did not end for the following groups
Before proceeding to the next distinct group, the interim MCS chosen for the concurrent grants (in the current group) needs to be saved. Only the grants that have not ended with the current group shall be saved, since those are the grants that will be part of the next group. Thus, the new group is composed of the grants that did not end in the last group and the grants following the ended grants in the same pilot pattern maps
These interim MCS will be used as part of the algorithm for improving MCS for each grant (step #3 in the flowchart)

5.2 Algorithm for improving MCS for each grant (step #3 of the slot compression mechanism)

The Algorithm is receiving a group of UL grants, with a worst case MCS assigned for each grant as previously stated.
The following steps are done per each grant:

Step 1: Finding the MCS of the parallel grants of $MS_i$ ($MCS_k$ of $MS_{k,k \neq i}$) under the current allocation conditions:

- MS; has several parallel grants in the group $MS_{k:k \neq i}$
- For each parallel grant ($MS_k$) the MCS is chosen ($MCS_k$)
- The parallel grants ($MS_k$) may have or may not have a history. A grant that wasn't part of the previous "groups" is a grant with no history. A grant that was part of the previous allocation and has already accumulated restrictions is a grant with history.

If MSk doesn't have a history then $MCS_k$ is chosen according to the following:

- $MCS_k = MCS_{k,non-CSM}$, as this is the most efficient MCS $MS_k$ can have (that is why it is the worst case pairing for $MS_i$)
- If the grant of $MS_k$ is a retransmission, then $MCS_k = MCS_{k,Retransmit}$
- If there is no grant of $MS_k$ (vacant slot on the spatial stream), then $MCS_k = MCS_0$

If $MS_k$ has a history, then $MCS_k = MCS_{k, prev. alloc}$. It is more robust than $MCS_{k,non-CSM}$, and that may ease the conditions of $MS_i$

Step 2: Finding the needed Carrier to Interference and Noise Ratio (CINR) for $MS_i$ ($CINR_i$) according to the parallel grants' MCS in the current allocation:

- For an UL transmissions comprising of N spatial streams, an N dimensional CINR table is used.
- The entry to the table is the MCS / CINR of $MS_i$ itself when in a non spatial mode (raw CINR measurement or MCS derived from a non-CSM table);
- Each projection / axis of the other N-1 dimensions is a discrete set of CINR figures, dependent on the MCS of the MS at that specific spatial stream;
- $CINR_i$ is the point of crossing the N projections;

Step 3:

- Finding the needed CINR for $MS_i$ according to the parallel grants' MCS taking into account both current and past allocations
- $CINR_i$ is MAX $\{CINR_i, CINR_{i, prev. alloc}\}$
- The new needed CINR (lower than the CINR needed for the worst case scenario) derives a more efficient MCS for $MS_i$ :[$MCS_i$, #slots, power corrections]=ULA($CINR_i$)

5.3 Statistical Pairing

As already told, the method for enhancing the UL throughput is based on a statistical pairing of mobiles stations in a plurality of mobile station.

One of the key features of a wireless communication system is to efficiently use the limited radio resources. A multiple input multiple output (MIMO) scheme is one scheme which spatially divides communication channels using plurality of transmitting and receiving antennas, providing up to MIN{#TX, #RX antennas} times the channel capacity gain of a single antenna system.

UL collaborative Spatial Division multiple Access (SDMA) is one of the advanced MIMO schemes, where several different single antenna subscribers share the same Orthogonal Frequency Division Multiplexing Access (OFDMA) time-frequency resources, transmitting several data streams.

In such a system, the main problem is how to schedule concurrent transmissions from the subscribers.

A classical blind/random scheduling strategy simplifies implementation and may even reduce the impact of pairing several incompatible subscribers' signals (introducing some diversity). On the other hand, blind scheduling is proved to result in system performance degradation

In a classical known "true" pairing scheduling strategy, a metric is devised for each concurrent received signal (usually correlation between a pair of subscribers). According to this metric per pair, N disjoint pairs are selected from the entire group. The credibility of the metrics and the resources needed (computing and storing the metrics, selecting the disjointed pairs in a proper manner) are the main disadvantages of this strategy.

The statistical pairing proposed doesn't comprise these disadvantages.

Indeed, one provides a scheduling strategy for UL collaborative SDMA, overcoming the need to actually pair the different layered transmissions. The scheduling strategy can be implemented as an apparatus and a method to achieve a gain over a naïve blind/random pairing scheduling, by using a statistical pairing strategy.

The method is to partition (to divide) the mobile station group into sub-groups based on "a per MS" metrics (and not per number of concurrent received signals which are usually limited to a pair), that predict the pairing performance. Then, use an allocation map rule on the sub-groups to statistically increase/decrease the probability of several UL bursts (of several MSs) to be paired.

The UL adaptation mechanism shall choose the worst case MCS (worst case in the sense of the worst case partner of all the pairing's options). Not imposing pairing constraints allows for additional algorithms to optimize the UL performance (such as the ones proposed before in the description). Choosing the worst case MCS assures that the UL resources will be enough since increasing the efficiency shall reduce the utilization.

Due to the statistical nature of the scheduling strategy, the scheduling strategy is complemented by a "switching mechanism", preventing a MS with bad prediction metrics to transmit a spatial signal on one hand, and switching a MS showing bad performance in the spatial region to non spatial region.

Such a statistical pairing has many advantages:

It solves "true" pairing disadvantages:

- statistical pairing doesn't mandate the same slot size of pairs, thus prevents capacity loss (due to emptily slots) and the complexity of the scheduler is reduced due to agnostic nature of mapping several pilot pattern maps;
- using metrics for pairs of MSs saves memory and CPU resources (monitoring, calculating and storing metrics per pair of subscribers);
- not affixing pairs introduces flexibility, allowing for retransmission with different partners gaining diversity;
- Further enhancements in UL utilization that utilize changes of position /allocation sizes are allowed since no pairing restrictions are introduced.

It reduces random nature of "Random" pairing, by introducing a "Statistical gain".

<u>Metrics predicting the pairing quality Per MS</u>

- MCS (Modulation, Coding): received from the ULA

    - MCS for the non-CSM region and for the CSM region;
    - MCS is derived from the received CINR, the PER and the frequency offset.

- Capacity degradation:

    - The ratio between the efficiency [bits/SC] in the CSM region and the efficiency in the non-CSM region;
    - The efficiency is directly derived from the MCS: efficiency = LUT(MCS);

    - $$\text{capacity degradation} = \frac{Func(MCS_{SCM})}{Func(MCS_{non-CSM})}.$$

- Packet slot size:

    - Indicating the number of slots a burst is "taking" in air resource;
    - Received through UL map scheduler.

- Frequency offset:

    - Frequency offset between MS and BS central frequencies: received through UL bursts statistics of each MS (either non CSM or CSM region).

<u>Allocation map rules</u>

- Assigning a MS to a pilot pattern map:

- #RX antennas dictates the number of pilot patterns;
- Assignment in the same pilot pattern map prevents pairing.

- Positioning a MS in a location [Frequency & Time] in a frame:

  - Method 1 - allocation direction: "start" (low Frequency & time) to "end" (high Frequency & time), or vice versa:

    - Probabilistic: position influences probability of pairing;
    - Uses an ordered metric list.

  - Method 2 - allocation specific slots: frequency / time:

    - Allocation distinction in frequency, or time or joint frequency - time;
    - Assignment in different allocation prevents pairing;
    - Uses subgroup that needs prevention of pairing.

- Assigning a MS to different frames:

  - Assignment to a different frame prevents pairing;
  - Uses subgroup that needs prevention of pairing.

Subgroup or ordered list based on Metrics Per MS

Definition:

- An ordered list is a list ordered by a certain metric;
- Subgroups are used to partition the MSs according to some partitioning threshold:

  - The partitioning threshold is a value of the metric;
  - The subgroups are mutually exclusive to one another.

Types of subgroups (or ordered lists if no partitioning threshold is defined) by Metrics:

- MCS subgroup:

  - MCS metric: MSs with high MCS have low quality when paired with other MSs with high MCS;
  - A MCS subgroup is therefore a subgroup that needs to prevent pairing;
  - Partitioning threshold between N subgroups is $\{MCS_1, MCS_2... MCS_{N-1}\}$.

- Packet slot size subgroup:

  - Packet slot size metric: The closer the packet slot sizes, the higher the quality when paired (close packet slot size indicates between one and two pairs for a burst. This reduces variance inside the burst);
  - A Packet size subgroup is therefore a subgroup that needs to cause pairing;
  - Partitioning threshold between N subgroups is $\{PCK_{size1}, PCK_{size2}... PCK_{sizeN-1}\}$.

- Frequency offset subgroup:

  - Frequency offset metric: The closer frequency offsets, the higher the quality when paired (similar center frequency between MSs is crucial);
  - A frequency offset subgroup is therefore a subgroup that needs to cause pairing;
  - Partitioning threshold between N subgroups is $\{FR_{size1}, FR_{size2...} FR_{sizeN-1}\}$.

**Claims**

1. Method for enhancing uplink frame throughput in an OFDMA system **characterized in that** it comprises, after a preliminary uplink map fill phase for at least one mobile station comprising allocation of grants in said uplink frame for said at least one mobile station, said method comprising at least one iteration of:

- a subchannel expansion step in which at least one subchannel is added to a subchannel of said uplink frame for said at least one mobile station, delivering an expanded uplink map;
- a slot compression step in which an improvement of a modulation and coding scheme is realized by increases said modulation and coding scheme of a grant dependent on an current pair/s optimizing mutual capacity delivering an improved uplink map.

2. Method for enhancing uplink frame according to claim 1, **characterized in that** grants are assigned in said preliminary uplink map fill phase by using a statistical pairing of a spatial multiplexing scheduling strategy for said at least one mobile station.

3. Method according to claim 2, **characterized in that** said statistical pairing divides a group of mobiles stations into sub-groups based on metrics related to mobiles stations themselves

4. Method according to claim 1 to 3, **characterized in that** said subchannel expansion step comprises:

- a polling step, to a quality of service scheduler, for identifying at least one pending grant to allocate for said at least one mobile station;
- a checking step for determining an availability of at least one vacant slot in said uplink map for said at least one pending grant, a slot being a part of a subchannel in said uplink map and
- an allocation step, in said uplink frame map, of said vacant slot for said pending grant if said previous checking step is positive.

5. Method according to claim 4, **characterized in that** said expansion step also comprises a second checking step for determining whether said grants of said at least one mobile station can be expanded and wherein said allocation step is processed if said second checking is positive.

6. Method according to claim 1 to 5, **characterized in that** said slot compression step comprises:

- A step of receiving at least one uplink map, an uplink map presenting a single spatial stream, the number of maps received is the number of parallel spatial streams and an uplink map comprising uplink grants previously assigned for said single spatial stream;
- A step of improving an modulation and coding scheme for at least one grant of said at least one uplink map;
- A step of recalculating of new sizes for all grants of said at least one uplink map;
- A step of saving history of grant/s which did not end for the following pairs.

7. Apparatus for enhancing uplink frame throughput in an OFDMA system **characterized in that** it comprises:

- means for filling an uplink map for at least one mobile station comprising allocating of grants in said uplink frame for said at least one mobile station;
- means for expanding a subchannel in which at least one subchannel is added to an subchannel of said uplink frame for said at least one mobile station, delivering an expanded uplink map;
- means for compressing slot comprising means for an improvement of a modulation and coding scheme by increasing said modulation and coding scheme of a grant dependent on an current pair/s optimizing mutual capacity delivering an improved uplink map.

8. Computer program product downloadable from a communications network and/or stored on a computer readable medium and/or executed by a microprocessor, **characterized in that** it includes instructions of program code for implementing the uplink frame throughput enhancing method by at least one of claims 1 to 6 when run on a computer.

Fig. 1

QoS Scheduler

MS$_i$ packets, size [Bytes]

MS$_z$ packets, size [Bytes]

MS$_y$ packets, size [Bytes]

MS$_x$ packets, size [Bytes]

MAP Scheduler

Bytes → Slots
(MCS)

MS$_0$ with MCS$_0$

MS$_2$ with MCS$_2$
MS$_2$ with MCS$_2$
MS$_2$ with MCS$_2$

MS$_3$ with MCS$_3$

-------

MS$_{N-1}$ with MCS$_{N-1}$ | MS$_N$ with MCS$_N$

UL FRAME

No place to fit any of the pending packets

MS$_X$ with MCS$_X$

MS$_Y$ with MCS$_Y$

MS$_Z$ with MCS$_Z$

MS$_I$ with MCS$_I$

## Fig. 2

QoS Scheduler

MS$_i$ packets, size [Bytes]

MAP Scheduler

Bytes → Slots
(MCS)

MS$_N$ with MCS$_N$

MS$_M$ with MCS$_M$       1
MS$_M$ with MCS$_M$       2
MS$_M$ with MCS$_M$
MS$_M$ with MCS$_M$       X

X sub-channels

MS$_M$ with MCS$_M$

MS$_M$ with MCS$_M$

power budget of MS$_M$ for
MCS$_M$ is X sub-channels

UL FRAME

## Fig. 3

No more grants pending in the QoS
All requirements are fullfilled

QoS Scheduler

- - - - - - - - - - - - - - - - - - - - - - - - - - - - - - - - - - - - - - - - - - - - - - - - - - - - - - - - - - - - - - - -

MAP Scheduler

| $MS_0$ with $MCS_0$ |
| $MS_2$ with $MCS_2$ |
| $MS_2$ with $MCS_2$ |
| $MS_2$ with $MCS_2$ |
| $MS_3$ with $MCS_3$ |
| - - - - - - - - |
| $MS_{N-1}$ with $MCS_{N-1}$ | $MS_N$ with $MCS_N$ |

UL FRAME

## Fig. 4

QoS Scheduler

| $MS_2$ packets,size [Bytes] | | $MS_2$ packets,size [Bytes] |

- - - - - - - - - - - - - - - - - - - - - - - - - - - - - - - - - - - - - - - - - - - - - - - - - - - - - - - - - - - - - - - -

MAP Scheduler

| $MS_0$ with $MCS_0$ |
| $MS_2$ with $MCS_2$ |
| $MS_2$ with $MCS_2$ |
| $MS_{N-1}$ with $MCS_{N-1}$ | $MS_N$ with $MCS_N$ |

UL FRAME

| $MS_0$ with $MCS_0$ |
| $MS_2$ with $MCS_{2a}$ |
| $MS_2$ with $MCS_{2a}$ |
| $MS_2$ with $MCS_{2a}$ |
| $MS_2$ with $MCS_{2a}$ |
| $MS_{N-1}$ with $MCS_{N-1}$ | $MS_N$ with $MCS_N$ |

UL FRAME

Increasing the number of SCH:
Reduces MS TX PSD by N dB
Reduces $MCS_2$ to $MCS_{2a}$

Example:
DL:UL = 29:18
MCS2 = QPSK 3/4
Bytes transmitted = $1/8*(18/3-1)*48*1.5*2=90$

MCS2a = QPSK 1/2
Bytes transmitted = $1/8*(18/3-1)*48*1*4=120$

## Fig. 5

## Fig. 6

EP 2 360 867 A1

Slot
compression

MS$_X$ with MCS$_{X,64QAM\ 5/6}$

MS$_Y$ with
MCS$_{Y,64QAM\ 5/6}$ | MS$_Z$ with
MCS$_{Z,64QAM\ 5/6}$ | MS$_A$ with
MCS$_{A,64QAM\ 5/6}$

MS$_X$ with MCS$_{X,64QAM\ 5/6}$

MS$_X$ with MCS$_{X/Z\&Y\&A}$

X$_{W.C.}$ Slots

X/Z&Y&A Slots

MS$_Y$ with
MCS$_{Y,64QAM\ 5/6}$ | MS$_Z$ with
MCS$_{Z,64QAM\ 5/6}$ | MS$_A$ with
MCS$_{A,64QAM\ 5/6}$

MS$_Y$ with
MCS$_{Y/X}$ | MS$_Z$ with
MCS$_{Z/X}$ | MS$_Y$ with
MCS$_{A/Y}$

Slot
compression

Slot
compression

Slot
compression

Optimizing MCS
dependent on pairs

Assigned slots with
most robust MCSs

Allocated (&compressed) slots with
optimizes MCSs

Fig. 7

**Fig. 8**

Fig. 9

Europäisches
Patentamt

European
Patent Office

Office européen
des brevets

**EUROPEAN SEARCH REPORT**

Application Number

EP 10 15 4148

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/186915 A1 (KIM YONG-SEOK [KR] ET AL) 7 August 2008 (2008-08-07) * paragraphs [0006], [0 30], [0 98] - [0104]; figure 7 * | 1-8 | INV. H04L5/00 H04W72/12 |
| A | QIAN Y ET AL: "Group-based user pairing for virtual MIMO in LTE" JOURNAL OF CHINA UNIVERSITIES OF POSTS AND TELECOMMUNICATIONS, XX, CN LNKD-DOI:10.1016/S1005-8885(07)60146-0, vol. 14, no. 3, 1 September 2007 (2007-09-01), pages 38-42, XP022938022 ISSN: 1005-8885 [retrieved on 2007-09-01] * page 40, left-hand column * | 1-8 | |
| A | US 2009/161527 A1 (YU XIAOYONG [US]) 25 June 2009 (2009-06-25) * paragraph [0028] * | 1-8 | TECHNICAL FIELDS SEARCHED (IPC) H04W H04L |

The present search report has been drawn up for all claims

| Place of search | Date of completion of the search | Examiner |
|---|---|---|
| Berlin | 21 July 2010 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**ANNEX TO THE EUROPEAN SEARCH REPORT
ON EUROPEAN PATENT APPLICATION NO.**
EP 10 15 4148

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2010

| Patent document cited in search report | Publication date | Patent family member(s) | Publication date |
|---|---|---|---|
| US 2008186915 A1 | 07-08-2008 | KR 20080072195 A | 06-08-2008 |
| US 2009161527 A1 | 25-06-2009 | WO 2009085625 A1 | 09-07-2009 |

EPO FORM P0459

For more details about this annex : see Official Journal of the European Patent Office, No. 12/82